# EUROPÄISCHE PATENTSCHRIFT

(11) **EP 0 706 880 B1**
(45) Veröffentlichungstag und Bekanntmachung des Hinweises auf die Patenterteilung: **24.03.1999**
(21) Anmeldenummer: 95115683.5
(22) Anmeldetag: 05.10.1995
(51) Int. Cl.: B41F 13/28

(54) **Lagerbuchse**
Bearing bush
Coussinet

(30) Priorität: 13.10.1994 DE 4436629
(43) Veröffentlichungstag der Anmeldung: 17.04.1996
(73) Patentinhaber: Koenig & Bauer Aktiengesellschaft, 97080 Würzburg (DE)
(72) Erfinder: Schaede, Johannes Georg, D-97074 Würzburg (DE)

(56) Entgegenhaltungen:
- EP-A- 0 614 759
- DD-C- 64 064
- DE-A- 2 636 555
- US-A- 3 786 749

## Beschreibung

Die Erfindung betrifft eine Lagerbuchse für Zylinder einer Rotationsdruckmaschine gemäß dem Oberbegriff des Anspruches 1.

Aus der DD-PS 00 64 064 ist eine Vorrichtung zum Festspannen einer Lagerbuchse für Zylinderlager mit hydraulischer Pressung der Lagerbuchsen gegen eine Bohrungswand eines Maschinengestells bekannt. Die Lagerbuchsen bestehen aus zwei aufeinandergeschrumpften Buchsenhülsen, wobei in eine Innenwand der äußeren Buchsenhülsen zwei hydraulisch beaufschlagbare Druckkammern eingearbeitet sind, die unter einem Winkel von 120° zur Resultierenden der auf das Zylinderlager wirkenden Kräfte liegen.
Nachteilig bei dieser Lagerbuchse ist, daß durch die Druckkammern eine Deformation des Außenringes in einen nur sehr schmalen Bereich erfolgt. Dadurch entsteht im Bereich der Deformationen des Außenrings zwischen Außenring und einer Bohrung im Gestell eine linienförmige bzw. eine sehr schmale, flächenförmige Kraftübertragung. Dies führt zu hohen Flächenpressungen des Materials und kann eine Überbelastung der Werkstoffe zur Folge haben.

Der Erfindung liegt die Aufgabe zugrunde eine Lagerbuchse für Zylinder einer Rotationsdruckmaschine zum spielfreien Festspannen dieser Lagerbuchse in einer Bohrung im Gestell zu schaffen, die bei hoher radialer Steifigkeit eine Flächenpressung bei hoher Anpreßkraft zwischen Lagerbuchse und einer Bohrung im Gestell und den zum Erreichen der Anpreßkraft erforderlichen Druck eines Druckmittels minimiert, wobei eine gute Anpassung der Lagerschale an die Form der Bohrung im Gestell erfolgen soll.

Diese Aufgabe wird erfindungsgemäß durch eine Vorrichtung mit den Merkmalen des kennzeichnenden Teiles des Anspruches 1 gelöst.

In vorteilhafter Weise wird durch die Anordnung von nur einer segmetartigen Druckkammer eine hohe radiale Steifigkeit der Lagerbuchse erreicht. Durch die Ausbildung der Druckkammer über einen großen Segmentbereich wird eine flächenförmige Kraftübertragung zwischen Lagerbuchse und einer Bohrung im Gestell bei niedriger Flächenpressung und hoher Anpreßkraft ermöglicht. Diese hohe Anpreßkraft wird bei vergleichsweise niedrigem Druck des Druckmediums erzielt, weswegen nur einfache und preiswerte Einrichtungen zur Erzeugung des Druckes und zum Transport von Druckmedien benötigt werden.
Auch wird durch die große Druckkammer eine sichere Anpressung der Form der Lagerbuchse an die Bohrung im Gestell über einen großen Bereich gewährleistet.

Zudem können auch evtl. durch dynamische Belastungen auftretende wechselnde Kräfte, die nicht in Richtung einer nach ihrem Betrag größten Resultierenden liegen, sehr gut aufgenommen werden.
Besonders vorteilhaft ist weiterhin, daß auch erst nach dem Verbinden von Innen- und Außenring der Lagerbuchse die Außenmantelfläche der Lagerbuchse fertig bearbeitet werden kann. Die zwischen Vertiefungen der Druckkammer verbleibenden Flächen der Mantelflächen des Innenringes stützen den Außenring während der Bearbeitung z. B. gegen die einwirkende Kraft der Schleifscheibe ab, was eine hohe Form- und Maßgenauigkeit bewirkt. Damit kann z. B. der Außenring als zentrisches Rohr mit dem Innenring verbunden werden und erst dann in einfacher Weise zu einem exzentrischen Außenring mit verringerter Wandstärke im Bereich der Druckkammer bearbeitet werden. Somit ist während der Bearbeitung zur Herstellung der Lagerbuchse eine gute Formstabilität der Lagerbuchse gerade im Bereich einer Druckkammer gewährleistet.
Außerdem ermöglicht eine einzige, stetig verlaufende Vertiefung der Druckkammer leichtes und sicheres Entlüften der Druckkammer.

Die erfindungsgemäße Vorrichtung ist in der Zeichnung dargestellt und wird im folgenden näher beschrieben

Es zeigen
- Fig. 1: eine schematischen Radialschnitt einer ersten Ausführungsvariante der erfindungsgemäßen Lagerbuchse,

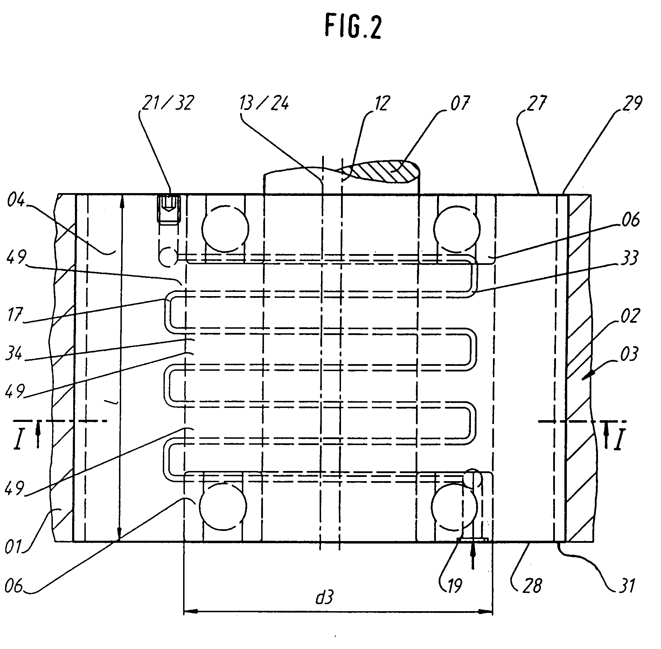

- Fig. 2: eine schematische Draufsicht einer ersten Ausführungsvariante der erfindungsgemäßen Lagerbuchse,
- Fig. 3: einen schematischen Radialschnitt einer zweiten Ausführungsvariante der erfindungsgemäßen Lagerbuchse,
- Fig. 4: eine schematische Draufsicht einer zweiten Ausführungsvariante der erfindungsgemäßen Lagerbuchse.

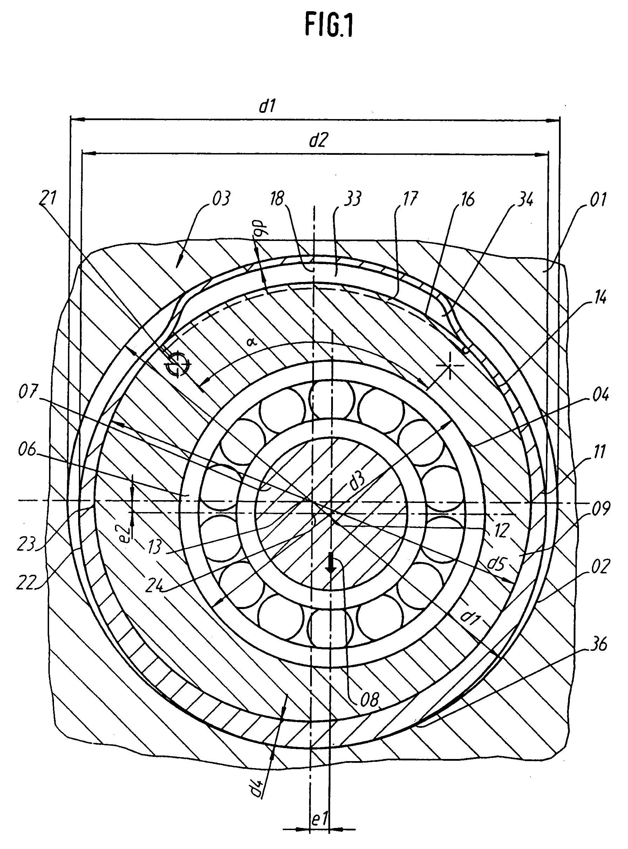

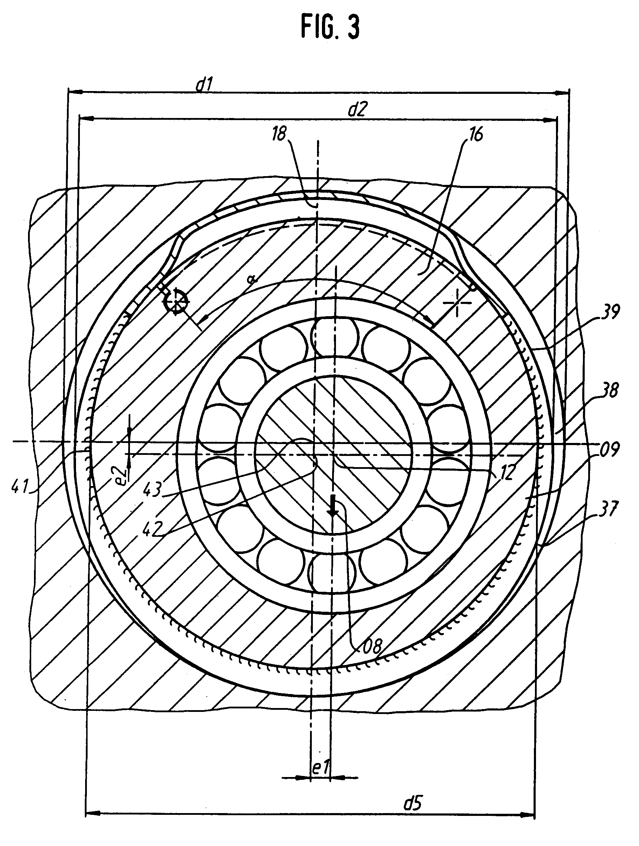

In einem Gestell 1 einer Rotationsdruckmaschine ist in einer Bohrung 2 mit einem Innendurchmesser d1, z. B. 300 mm, eine zylinderförmige Lagerbuchse 3 mit einem Außendurchmesser d2, z. B. 300 mm, und einer Länge l, z. B. 250 mm, angeordnet. In den schematischen Radialschnitten (Fig. 1 und Fig. 3) sind zur besseren Darstellung die Durchmesser d1 und d2 stark unterschiedlich gezeichnet. In der Praxis werden sie sich aber nur um wenige zehntel Millimeter unterscheiden. Die Lagerbuchse 3 ist in bekannter Weise mit einer Bohrung 4 mit einem Innendurchmesser d3, z. B. 250 mm, zur Aufnahme einer Lagerung 6 eines Zapfens 7 eines Zylinders versehen. Die Lagerung 6 kann als bekannte, spielfreie Wälzlagerung oder als Gleitlagerung ausgeführt sein. Die Bohrung 4 der Lagerbuchse 3 kann zentrisch oder exzentrisch zur Bohrung 2 im Gestell liegen. In der dargestellten Lagerbuchse liegen die Bohrung 4 der Lagerbuchse 3 und die Bohrung 2 im Gestell um eine Exzentrizität e1, z. B. 15 mm, exzentrisch zueinander. Diese ermöglicht durch Schwenken der Lagerbuchse 3 in der Bohrung 2 im Gestell eine Lageveränderung des Zylinders bezüglich des Gestells 1 und damit evtl. bezüglich eines oder mehreren weiteren Zylindern. Durch diese Lageveränderung kann z. B. der Abstand zweier Zylinder zu Einstellarbeiten oder auch zur Druckabstellung verändert werden.

Durch Zusammenwirken des in der Lagerbuchse 3 gelagerten Zylinders mit ein oder mehreren weiteren Zylindern und infolge Gravitationskräfte ergibt sich eine Resultierende 8 der auf Lagerbuchse 3 wirkenden Kräfte. Diese Resultierende 8 kann statisch sein oder aber auch dynamisch ihre Größe und Richtung durch z. B. wechselnde Druckkräfte infolge Kanaldurchlaufes ändern. Im folgenden wird die nach ihrem Betrag größte Resultierende 8 betrachtet.

Die Lagerbuchse 3 besteht im wesentlichen aus einem Innenring 9 und einem Außenring 11. Der Innenring 9 ist hohlzylinderförmig ausgebildet, wobei seine Bohrung 4, d. h. deren Mittelachse 12, exzentrisch zu einer Mittelachse 13 seiner Außenmantelfläche 14 liegt.
In ein sich über einen Segmentwinkel Alpha über 60° bis 120° in Umfangsrichtung erstreckendes Segment 16 der Außenmantelfläche 14 des Innenringes 9 sind nutartige Vertiefungen 17 eingebracht, wobei dieses Segment 16 in der Seitenansicht gesehen annähernd der Richtung der Resultierenden 8 der auf die Lagerbuchse 3 wirkenden Kräfte gegenüber liegt, d. h. eine Winkelhalbierende 18 dieses Segmentes 16 liegt parallel, um die Exzentrizität e1 versetzt zu der Resultierenden 8.
Die nutartigen Vertiefungen 17 können als ein System von mehreren einzelnen Vertiefungen 17, die miteinander verbunden sind ausgebildet sein. Im dargestellten Beispiel ist eine einzige, stetig fortlaufende Vertiefung 17, die mäanderförmig verläuft und deren Ende jeweils in einer Anschlußbohrung 19, 21 mündet, angeordnet. Die Anzahl und Lage der einzelnen Schleifen der mäanderförmig verlaufenden Vertiefung 17 ist wählbar.
Auf diesem Innenring 9 ist der Außenring 11 enganliegend, beispielsweise mittels eines Preßsitzes aufgebracht. Der Außenring 11 kann aus einem Rohr mit einer Wandstärke d4 von beispielsweise 5 mm bis 10 mm bestehen. Im ersten Ausführungsbeispiel ist der Außenring 11 als exzentrisches, hohlzylinderförmiges Rohr ausgebildet, welches an seiner Mantelfläche 22 den Außendurchmesser d2 und in seiner Bohrung 23 einen Innendurchmesser d5, z. B. 288 mm, aufweist. Eine Mittelachse 24 der Mantelfläche 22 des Außenringes 11 ist um eine auf der Winkelhalbierenden 18 und in Richtung des Segmentes 16 liegende Exzentrizität e2, z. B. 3 mm, zur Mittelachse 13 der Bohrung 23 des Außenrings 11 verschoben, wodurch sich im Bereich des Segmentes 16 eine reduzierte Wandstärke d6 von 2 - 5 mm ergibt.

Die Mittelachse 24 der Mantelfläche 22 des Außenringes 11 ist um die Exzentrizität e1 annähernd lotrecht bezüglich der Winkelhalbierenden 18 des Segmentes 16 zur Mittelachse 12 der Bohrung 4 des Innenringes 9 verschoben.

Die Exzentrizität e2 der Bohrung 23 des Außenringes 11 liegt vorzugsweise annähernd senkrecht zur Exzentrizität e1 der Bohrung 4 des Innenringes 9 bei exzentrischer Ausführung der Lagerbuchse 3, d. h. bei exzentrischer Lage der Bohrung 4 zur Mantelfläche 22. Bei zentrischer Ausführung der Lagerbuchse 3, d. h. bei zentrischer Lage der Bohrung 4 zur Mantelfläche 22, liegt die Exzentrizität e1 der Mittelachse 12 der Bohrung 4 des Innenringes 9 und der Mittelachse 24 der Mantelfläche 22 des Außenringes 11 entgegengesetzt zur Exzentrizität e2 der Mittelachse 24 der Mantelfläche 22 und der Mittelachse 13 der Bohrung 23 des Außenringes 11 und der Betrag der Exzentrizität e1 ist gleich dem Betrag der Exzentrizität e2.
Der Innenring 9 ist mit dem Außenring 11 an den jeweiligen Stirnseiten 27, 28, 29, 31 jeweils dicht und, beispielsweise stoffschlüssig, z. B. verschweißt, verbunden, aber es ist auch eine reibschlüssige Verbindung mit entsprechenden Abdichtungen, z. B. O-Ringen, möglich.

Die Wirkungsweise der Lagerbuchse 3 ist folgendermaßen:
Die erste Anschlußbohrung 19 der Vertiefung 17, die sich durch das Umhüllen des Innenrings 9 mit dem Außenring 11 zu einem geschlossenen, mäanderförmigen Kanal 17 ergibt, wird mit einer Druckmittelversorgung verbunden, während die zweite Anschlußbohrung 21 nach erfolgter Entlüftung des Kanals 17 mit einem Stopfen 32 verschlossen wird. Wird nun der Kanal 17 mit Druckmedium 33 beaufschlagt, wird der Außenring 11 besonders im Bereich des Segmentes 16 radial deformiert. Dadurch ergibt sich im Bereich des Segmentes 16 zwischen Innen- und Außenring 9, 11 ein Spalt, in den weiteres Druckmedium 33 gepreßt wird und somit der gesamte Bereich des Segmentes 16 flächenförmig mit Druckmedium 33 beaufschlagt wird. Der gesamte Bereich des Segmentes 16 zwischen Innen- und Außenring 9, 11 bildet hiermit eine Druckkammer 34. Eine Verformung des gegenüberliegenden Teiles des Außenringes 11 erfolgt nicht, weil einerseits kaum Druckmedium 33 durch den eventuell verbleibenden minimalen Spalt in diesen Teil dringen kann und andererseits die erhöhte Wandstärke d4 eine Deformation verhindert.
   Als Druckmedium 33 wird vorzugsweise Hydrauliköl verwendet, aber auch andere Stoffe, wie Preßluft, Fette, Pasten oder feinkörnige Stoffe sind geeignet.

Die durch die Druckkammer 34 radial deformierte Mantelfläche 22 des Außenrings 11 drückt die Lagerbuchse 3 in Richtung der Resultierenden 8 der einwirkenden Kräfte mit einer zusätzlichen durch die Druckkammer 34 erzeugten flächenförmigen Kraft an die Innenmantelfläche 36 der Bohrung 2 im Gestell. Dadurch wird die Mantelfläche 22 des Außenringes 11 im Bereich der Druckkammer 34 der Innenmantelfläche 36 der Bohrung 2 im Gestell angepaßt.

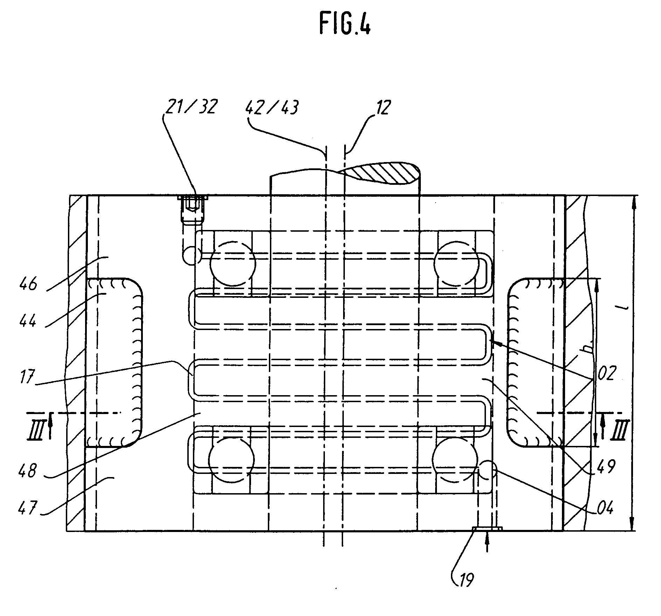

In einer zweiten Ausführungsvariante (Fig. 3 und Fig. 4) ist eine Lagerbuchse 37 ebenfalls zweiteilig aus Innenring 9 und Außenring 38 aufgebaut, wobei deren Innenring 9 dem der ersten Lagerbuchse 3 entspricht.
Der Außenring 38 kann aus einem Rohr bestehen, wobei im zweiten Beispiel auch ein exzentrisches, hohlzylinderförmiges Rohr verwendet wird, welches an seiner Mantelfläche 39 annähernd den Außendurchmesser d2 und in seiner Bohrung 41 den Innendurchmesser d3 aufweist. Eine Mittelachse 42 der Mantelfläche 39 des Außenringes 38 ist exzentrisch um die auf der Winkelhalbierenden 18 und in Richtung des Segmentes 16 liegende Exzentrizität e2 zur Mittelachse 43 der Bohrung 41 des Außenringes 38 verschoben. Die Exzentrizität e2 der Bohrung 41 des Außenringes 38 liegt vorzugsweise annähernd senkrecht zur Exzentrizität e1 der Bohrung 4 des Innenringes 9. Dieser Außenring 38 ist über eine Breite b, z. B. 200 mm, die kleiner ist als die Länge l der Lagerbuchse 37 ist, mit einer segmentartigen Ausnehmung 44 derart versehen, daß zwei exzentrische, rohrförmige Tragringe 46, 47 entstehen, die in dem Abstand b durch ein sich über den Segmentwinkel Alpha erstreckendes, schalenförmiges Segment 48 der Breite b verbunden sind.
Der Außenring 38 ist entlang seiner Außenkontur mit dem Innenring 9 stoffschlüssig, z. B. verschweißt, verbunden.
Die Wirkungsweise des zweiten Ausführungsbeispiel entspricht im wesentlichen dem ersten. Durch die Tragringe 46, 47 entsteht in Richtung der Resultierenden 8 über die Länge l der Lagerbuchse 37 eine verringerte, aber definierte, eindeutige Berührfläche, weswegen Form- und Lagefehler der Bohrung 2 im Gestell weitgehend toleriert werden können.

Bei beiden Ausführungen können natürlich die Vertiefungen 17 statt im Innenring 9 auch im Außenring 11, 38 angebracht sein. Auch verbleiben in beiden Ausführungen zwischen den Vertiefungen 17 tragende Anteile 49 der Mantelfläche 14 des Innenringes 9.

### Teileliste

- 1: Gestell
- 2: Bohrung (1)
- 3: Lagerbuchse
- 4: Bohrung (3)
- 5: -
- 6: Lagerung (7)
- 7: Zapfen
- 8: Resultierende
- 9: Innenring (3)
- 10: -
- 11: Außenring (3)
- 12: Mittelachse (4)
- 13: Mittelachse (14)
- 14: Außenmantelfläche (9)
- 15: -
- 16: Segment (14)
- 17: Vertiefungen, Kanal (16)
- 18: Winkelhalbierende (16)
- 19: Anschlußbohrung
- 20: -
- 21: Anschlußbohrung
- 22: Mantelfläche (11)
- 23: Bohrung (11)
- 24: Mittelachse (22)
- 25: -
- 26: -
- 27: Stirnseite (9)
- 28: Stirnseite (9)
- 29: Stirnseite (11)
- 30: -
- 31: Stirnseite (11)
- 32: Stopfen
- 33: Druckmedium
- 34: Druckkammer
- 35: -
- 36: Innenmantelfläche (2)
- 37: Lagerbuchse, zweite
- 38: Außenring (37)
- 39: Mantelfläche (38)
- 40: -
- 41: Bohrung (38)
- 42: Mittelachse (39)
- 43: Mittelachse (41)
- 44: Ausnehmung, segmentartig
- 45: -
- 46: Tragring
- 47: Tragring
- 48: Segment, schalenförmig
- 49: Anteile, tragend
- b: Breite (44)
- d1: Innendurchmesser (2)
- d2: Außendurchmesser (3)
- d3: Innendurchmesser (4)
- d4: Wandstärke (11)
- d5: Innendurchmesser (11)
- d6: Wandstärke (11)
- e1: Exzentrizität (12, 13)
- e2: Exzentrizität (24, 12)
- l: Länge (3)
- Alpha: Segmentwinkel

## Patentansprüche

1. Lagerbuchse (3; 37) für Zylinder einer Rotationsdruckmaschine zum spielfreien Festspannen dieser Lagerbuchse (3; 37) in einer Bohrung (2) im Gestell, wobei die Lagerbuchse (3; 37) einen Innenring (9) und eine Außenring (11; 38) aufweist und die Lagerbuchse (3; 37) zwischen dem Innenring (9) und dem Außenring (11; 38) mit einem Druckmedium (33) beaufschlagbaren Druckkammern (34) versehen ist, dadurch gekennzeichnet, daß die Lagerbuchse (3; 37) mit einer einzigen, sich über einen Segmentwinkel (Alpha) von 60° bis 120° in Umfangsrichtung erstreckenden Druckkammer (34) versehen ist, und daß diese Druckkammer (34) in annähernd gegenüberliegender Richtung einer nach dem Betrag größten Resultierenden (8) von einwirkenden Kräften angeordnet ist, wobei die Außenmantelfläche (14) des Innenringes (9) bzw. die Bohrung (23; 41) des Außenringes (11; 38) der Lagerbuchse (3; 37) mit einer einzigen, stetig fortlaufenden, mäanderförmigen Vertiefung (17) mit verbleibenden, tragenden Anteilen (49) der entsprechenden Mantelfläche (14) bzw. Bohrung (23; 41) im Bereich der segmentartigen Druckkammer (34) versehen ist, und diese Vertiefung (17) mit dem Druckmedium (33) beaufschlagbar ist.

2. Lagerbuchse nach Anspruch 1, dadurch gekennzeichnet, daß der Innenring (9) der Lagerbuchse (3; 37) eine Außenmantelfläche (14) und eine Bohrung (4) aufweist, deren Mittelachse (12) exzentrisch zu einer Mittelachse (13) der Außenmantelfläche (14) angeordnet ist, daß der Außenring (11; 38) der Lagerbuchse (3; 37) eine Mantelfläche (22, 39) und eine Bohrung (23; 41) aufweist, wobei eine Mittelachse (24; 42) der Mantelfläche (22; 39) äquidistant um eine auf einer Winkelhalbierenden (18) und in Richtung des Segmentes (16) liegende Exzentrizität (e2) zur Mittelachse (13; 43) der Bohrung (23; 41) versetzt angeordnet ist.

3. Lagerbuchse nach Anspruch 2, dadurch gekennzeichnet, daß bei einer exzentrischen Lagerbuchse (3; 37) eine Exzentrizität (e1) der Mittelachse (12) der Bohrung (4) und der Mittelachse (24; 42) der Mantelfläche (22; 39) des Außenringes (11; 38) annähernd senkrecht zur Exzentrizität (e2) der Mittelachse (24, 42) der Mantelfläche (22; 39) und der Mittelachse (13; 43) der Bohrung (23; 41) des Außenringes (11; 38) angeordnet ist.

4. Lagerbuchse nach Anspruch 2, dadurch gekennzeichnet, daß bei einer zentrischen Lagerbuchse (3; 37) die Exzentrizität (e1) der Mittelachse (12) der Bohrung (4) des Innenringes (9) und der Mittelachse (24; 42) der Mantelfläche (22; 39) des Außenringes (11; 38) entgegengesetzt zur Exzentrizität (e2) der Mittelachse (24, 42) der Mantelfläche (22; 39) und der Mittelachse (13; 43) der Bohrung (23; 41) des Außenringes (11; 38) angeordnet ist, und daß der Betrag der Exzentrizität (e1) gleich dem Betrag der Exzentrizität (e2) ist.

5. Lagerbuchse nach Anspruch 2, dadurch gekennzeichnet, daß der Außenring (38) mit einer segmentartigen Ausnehmung (44) versehen ist, so daß zwei exzentrische Tragringe (46; 47) entstehen, die durch ein sich über den Segmentwinkel (Alpha) erstreckendes, schalenförmiges Segment (48) verbunden sind.

## Claims

1. Bearing bush (3; 37) for cylinders of a rotary printing machine for clamping this bearing bush (3; 37), free of play, in a bore (2) in the stand, the bearing bush (3; 37) having an inner ring (9) and an outer ring (11; 38), and the bearing bush (3; 37) being provided between the inner ring (9) and the outer ring (11; 38) with pressure chambers (34) capable of being loaded with a pressure medium (33), characterized in that the bearing bush (3; 37) is provided with a single pressure chamber (34) extending in the circumferential direction over a segment angle (alpha) of 60° to 120°, and in that this pressure chamber (34) is arranged in the approximately opposite direction to a resultant (8) of forces exerted which has the greatest amount, the outer cylindrical surface (14) of the inner ring (9) or the bore (23; 41) of the outer ring (11; 38) of the bearing bush (3; 37) being provided with a single, continuously running, meander-shaped depression (17), together with the remaining supporting portions (49) of the corresponding cylindrical surface (14) or bore (23; 41), in the region of the segment-like pressure chamber (34), and this depression (17) being capable of being loaded with the pressure medium (33).

2. Bearing bush according to Claim 1, characterized in that the inner ring (9) of the bearing bush (3; 37) has an outer cylindrical surface (14) and a bore (4), the mid-axis (12) of which is arranged eccentrically to a mid-axis (13) of the outer cylindrical surface (14), in that the outer ring (11; 38) of the bearing bush (3; 37) has a cylindrical surface (22, 39) and a bore (23; 41), a mid-axis (24; 42) of the cylindrical surface (22; 39) being arranged offset equidistantly to the mid-axis (13; 43) of the bore (23; 41) by an eccentricity (e2) lying on a bisector (18) and in the direction of the segment (16).

3. Bearing bush according to Claim 2, characterized in that, when the bearing bush (3; 37) is eccentric, an eccentricity (e1) of the mid-axis (12) of the bore (4) and of the mid-axis (24; 42) of the cylindrical surface (22; 39) of the outer ring (11; 38) is arranged approximately perpendicularly to the eccentricity (e2) of the mid-axis (24, 42) of the cylindrical surface (22; 39) and of the mid-axis (13; 43) of the bore (23; 41) of the outer ring (11; 38).

4. Bearing bush according to Claim 2, characterized in that, when the bearing bush (3; 37) is centric, the eccentricity (e1) of the mid-axis (12) of the bore (4) of the inner ring (9) and of the mid-axis (24; 42) of the cylindrical surface (22; 39) of the outer ring (11; 38) is arranged opposite to the eccentricity (e2) of the mid-axis (24, 42) of the cylindrical surface (22; 39) and of the mid-axis (13; 43) of the bore (23; 41) of the outer ring (11; 38), and in that the amount of eccentricity (e1) is equal to the amount of eccentricity (e2).

5. Bearing bush according to Claim 2, characterized in that the outer ring (38) is provided with a segment-like recess (44), so as to produce two eccentric supporting rings (46; 47) which are connected by means of a shell-shaped segment (48) which extends over the segment angle (alpha).

## Revendications

1. Coussinet (3 ; 37) destiné à des cylindres d'une machine à imprimer rotative pour bloquer sans jeu ledit coussinet (3 ; 37) dans un alésage (2) du bâti, le coussinet (3 ; 37) comportant une bague intérieure (9) et une bague extérieure (11 ; 38), et le coussinet étant pourvu, entre la bague intérieure (9) et la bague extérieure (11 ; 38), de chambres de pression (34) pouvant être remplies d'un agent de pression (33), caractérisé en ce que le coussinet (3 ; 37) est pourvu d'une seule chambre de pression (34) qui s'étend dans le sens circonférentiel sur un angle formant segment (α) de 60° à 120°, et en ce que ladite chambre de pression (34) se trouve sensiblement à l'opposé d'une résultante (8) maximale en termes de valeur, la surface d'enveloppe extérieure (14) de la bague intérieure (9) ou l'alésage (23 ; 41) de la bague extérieure (11 ; 38) du coussinet (3 ; 37) étant pourvu, dans la zone de la chambre de pression formant segment (34), d'un renfoncement unique continu (17) à tracé en méandres associé à des portions porteuses restantes (49) de la surface d'enveloppe correspondante (14) ou de l'alésage (23 ; 41), et ledit renfoncement (17) pouvant être rempli d'agent de pression (33).

2. Coussinet selon la revendication 1, caractérisé en ce que la bague intérieure (9) du coussinet (3 ; 37) comporte une surface d'enveloppe extérieure (14) et un alésage (4) dont l'axe médian (12) est excentré par rapport à l'axe médian (13) de la surface d'enveloppe extérieure (14), en ce que la bague extérieure (11 ; 38) du coussinet (3 ; 37) comporte une surface d'enveloppe (22, 39) et un alésage (23 ; 41), l'axe médian (24 ; 42) de la surface d'enveloppe (22 ; 39) étant décalé, par rapport à l'axe médian (13 ; 43) de l'alésage (23 ; 41), de manière équidistante selon une excentricité (e2) située sur une bissectrice (18) et en direction du segment (16).

3. Coussinet selon la revendication 2, caractérisé en ce que, dans un coussinet excentrique (3 ; 37), l'excentricité (e1) de l'axe médian (12) de l'alésage (4) et de l'axe médian (24 ; 42) de la surface d'enveloppe (22 ; 39) de la bague extérieure (11 ; 38) est sensiblement perpendiculaire à l'excentricité (e2) de l'axe médian (24, 42) de la surface d'enveloppe (22 ; 39) et de l'axe médian (13 ; 43) de l'alésage (23 ; 41) de la bague extérieure (11 ; 38).

4. Coussinet selon la revendication 2, caractérisé en ce que, dans un coussinet centré (3 ; 37), l'excentricité (e1) de l'axe médian (12) de l'alésage (4) de la bague intérieure (9) et de l'axe médian (24 ; 42) de la surface d'enveloppe (22 ; 39) de la bague extérieure (11 ; 38) est opposée à l'excentricité (e2) de l'axe médian (24, 42) de la surface d'enveloppe (22 ; 39) et de l'axe médian (13 ; 43) de l'alésage (23 ; 41) de la bague extérieure (11 ; 38), et en ce que la valeur de l'excentricité (e1) est égale à la valeur de l'excentricité (e2).

5. Coussinet selon la revendication 2, caractérisé en ce que la bague extérieure (38) est pourvue d'un évidement (44) formant segment, ce qui donne naissance à deux bagues porteuses excentriques (46 ; 47) qui sont reliées par un segment (48) en forme de coquille qui s'étend sur l'angle (α) formant segment.
